# EUROPÄISCHE PATENTANMELDUNG

(11) **EP 4 418 033 A1**
(43) Veröffentlichungstag der Anmeldung: **21.08.2024**
(21) Anmeldenummer: 24155924.4
(22) Anmeldetag: 06.02.2024
(51) Int. Cl.: G02B 27/01

(54) **GEHÄUSEEINHEIT FÜR EIN HEAD-UP-DISPLAY**

(30) Priorität: 20.02.2023 DE 102023104080
(71) Anmelder: Valeo Schalter und Sensoren GmbH, 74321 Bietigheim-Bissingen (DE)
(72) Erfinder: RATH, Joachim, 74321 Bietigheim-Bissingen (DE); RIVIERE, Thierry, 78320 Le Mesnil-Saint-Denis (FR); BROUARD, Pascal, 78320 Le Mesnil-Saint-Denis (FR); KUNTZE, Daniel, 74321 Bietigheim-Bissingen (DE); BOTTA, Stephane, 94000 Creteil (FR)
(74) Vertreter: Ralf, Thorge

(57) **Zusammenfassung**

In der Erfindung geht es um ein Gehäuse für ein Head-up-Display (10). Das Gehäuse umfasst eine Gehäuseeinheit (20), bei der ein Skelett aus Metall mit einer Kunststoffschicht überspritzt wird, um ein besonders stabiles und langlebiges Gehäuse zu erhalten. Das Skelett aus Metall wird durch eine Tragstruktur (21) realisiert, die mehrere Tragarme (21a) umfasst. An den Tragarmen (21a) sind Wandungsbereiche (24a) aus Kunststoff gehalten. Mittels den Wandungsbereichen (24a) sind Öffnungen (O) zwischen den Tragarmen (21a) zumindest teilweise verschlossen.

## Beschreibung

Die Erfindung betrifft eine Gehäuseeinheit für ein Head-up-Display. Die Gehäuseeinheit kann zum Beispiel als Gehäuseteil, also als zumindest Teilbereich eines Gehäuses, verstanden werden. Die Erfindung betrifft des Weiteren ein Gehäuse für ein Head-up-Display mit einer entsprechenden Gehäuseeinheit. Des Weiteren betrifft die Erfindung ein Head-up-Display mit einer entsprechenden Gehäuseeinheit und/oder einem entsprechenden Gehäuse. Schließlich betrifft die Erfindung ein Kraftfahrzeug mit einem entsprechenden Head-up-Display.

Es gibt Kraftfahrzeuge, bei denen sogenannte Head-up-Displays ("Kopf-Oben-Anzeige"), im Folgenden auch mit HUD abgekürzt, eingesetzt werden. Das HUD kann zu Beispiel Teil eines Fahrassistenzsystem oder eines elektronischen Fahrzeugführungssystems sein. Mittels eines Head-up-Displays kann einem Fahrer eine Information direkt in dessen Sichtfeld eingeblendet oder dargestellt werden. Die Information kann der Fahrer einer Projektion oder einem Projektionsbild entnehmen, welches einige Meter voraus, zum Beispiel im Bereich der Motorhaube, projiziert wird und dort zu schweben scheint. Zu den angezeigten Informationen kann zum Beispiel eine Geschwindigkeit, Warnsignale, Umgebungsmerkmale, wie zum Beispiel Verkehrsschilder und/oder eine Streckenanzeige für eine Navigation gehören. Dadurch, dass die Information direkt im Sichtfeld angezeigt wird, ergibt sich der Vorteil, dass der Fahrer zum Beispiel nicht nach unten oder seitlich auf ein Display blicken muss, um die Information zu erhalten. Dadurch wird eine Ablenkung des Fahrers bei der Teilnahme am Straßenverkehr reduziert, und das Erhalten von Informationen ist komfortabler gestaltet. Ein HUD kann dadurch helfen, Kollisionen zu vermeiden oder gefährliche Situationen zu verhindern oder zum Beispiel eine Spur zu halten oder es können sogar virtuelle Fahrspuren generiert werden.

Es gibt verschiedene Typen von HUDs, von denen hier beispielhaft drei genannt sind. Ein Typ kann ein Windschutzscheiben-HUD sein, bei dem eine Reflektion an der Windschutzscheibe als Projektionsfläche für einen Effekt eines schwebenden Bilds (Floating Image Effect) führt. Ein weiterer Typ ist ein sogenanntes Combiner HUD. Dabei umfasst das HUD selbst eine Scheibe, den sogenannten Combiner als Projektionsfläche, die für den Betrieb einfach ausgeklappt werden kann. Solche Combiner HUDs eignen sich besonders gut für eine Nachrüstung eines HUD im Kraftfahrzeug. Ein weiterer Typ wird als Augmented Reality HUD bezeichnet. Dabei wird mittels des HUD eine Projektion erzeugt, die mit der realen Umgebung überlagert wird. Diese Überlagerung wird Augmented Reality (AR) oder erweiterte Realität genannt.

Die Funktionsweise und die Bauweise eines HUD sind grundsätzlich bekannt. Zum Beispiel umfasst ein HUD eine Optikbaugruppe. Mit der Optikbaugruppe sind dabei diejenigen Komponenten eines Head-up-Displays gemeint, mittels derer das Projektionsbild in der gewünschten Weise bereitgestellt werden kann. Dazu können zum Beispiel eine Lichtquelle, wie ein Display (Bildschirm) und ein Optikmodul gehören. Die Lichtquelle dient als Projektor zum Erzeugen des Projektionsbilds. Das Optikmodul kann zum Beispiel Umlenkspiegel zum Umlenken des Projektionsbilds auf die jeweilige Projektionsfläche, etwa den Combiner oder die Windschutzscheibe, umfassen.

Zum Aufnehmen oder Anbringen der Optikbaugruppe oder einzelner Komponenten davon kann zudem ein Gehäuse vorgesehen sein. Das Gehäuse ist bei herkömmlichen HUDs beispielsweise aus Kunststoff hergestellt.

Ein Beispiel für ein Head-up-Display mit einem Gehäuse aus Kunststoff ist in der WO 2016 175 032 A1 offenbart. Das Gehäuse ist aus einem Kunstharz, wie zum Beispiel Polycarbonat oder Polypropylen, hergestellt.

Kunststoff oder Plastik hat den Vorteil, dass es zum Beispiel leicht und günstig herzustellen ist und nicht elektrisch leitfähig ist. Allerdings hat Kunststoff den Nachteil einer geringen mechanischen Stabilität und thermischen Stabilität, einer hohen thermischen Ausdehnung und/oder einer hohen Steifigkeit. Beim Verwenden eines Kunststoffgehäuses kann es somit mit der Zeit aufgrund der Eigenschaften des Kunststoffs zum Verziehen oder Brechen von Gehäuseteilen kommen. Dadurch kann es vorkommen, dass die Optikbaugruppe nicht mehr korrekt gehalten wird und dadurch das Projektionsbild nicht mehr wie gewünscht, also zum Beispiel an der gewünschten Position oder mit der gewünschten Schärfe oder Ausrichtung, für den Fahrer dargestellt werden kann.

Es ist die Aufgabe der vorliegenden Erfindung, die Zuverlässigkeit eines Head-up-Displays über dessen Benutzungszeitraum zu erhöhen.

Die Aufgabe wird gelöst durch die Gegenstände der unabhängigen Patentansprüche. Weitere Vorteile und Ausführungsformen sind in den abhängigen Patentansprüchen, der Beschreibung und den Figuren zu entnehmen.

Die Erfindung basiert auf der Erkenntnis, dass sich anstelle von Kunststoff als Material für das Gehäuse beispielsweise ein Metall eignen könnte. Bei Metall (im Vergleich zu Kunststoff) als Werkstoff besteht der Vorteil in seiner hohen mechanischen und thermischen Stabilität, einer geringen thermischen Ausdehnung und seiner Festigkeit und Formstabilität. Allerdings hat Metall als Material für das Gehäuse den Nachteil, dass es zum Beispiel korrodieren kann und mit einem höheren Gewicht verbunden ist.

Um die besten Eigenschaften beider Werkstoffe, also Kunststoff und Metall zu vereinen, ist in der Erfindung deshalb vorgesehen, beide Materialien zum Bilden des HUD-Gehäuses zu verwenden. Dabei kann zum Beispiel eine Art Skelett aus Metall verwendet werden, die zum Beispiel mit Kunststoff zum Bilden einer Wandung umspritzt oder überspritzt wird. Das Metallskelett kann als Tragstruktur, also als Träger, für die Wandung verwendet werden, um die Stabilität der Komponenten der Optikbaugruppe zu garantieren. Dadurch kann insbesondere stabile Referenz für die Toleranzkette in der Optikbaugruppe für die Bildprojektion realisiert werden. Der "Skelettansatz" ist günstiger als Metallgehäuse und kombiniert die Vorteile der verschiedenen Materialeigenschaften, also von Kunststoff und Metall.

Zum Umsetzen der Skelettbauweise schlägt die Erfindung gemäß einem Aspekt eine Gehäuseeinheit für ein Head-up-Display vor. Die Gehäuseeinheit kann als Gehäuseteil eines Gehäuses, also als zumindest ein Teilbereich des Gehäuses, für das Head-up-Display verstanden werden. Die Gehäuseeinheit kann die Optikbaugruppe oder einzelne Komponenten des Head-up-Displays aufnehmen. Die Gehäuseeinheit umfasst eine Tragstruktur aus Metall und Wandungsbereiche aus Kunststoff. Die Tragstruktur umfasst mehrere Tragarme, wobei die Tragstruktur vorzugsweise einteilig ausgebildet ist, wobei die Wandungsbereiche an den Tragarmen, also der Tragstruktur, gehalten sind. Mittels der Wandungsbereiche sind Öffnungen zwischen den Tragarmen zumindest teilweise, also abschnittsweise oder bereichsweise, verschlossen. Das heißt, die Wandungsbereiche können die Öffnungen überdecken oder abdecken. Somit ergibt sich im Bereich oder Abschnitt des jeweiligen Wandungsbereichs eine geschlossene Gehäuseeinheit.

Eine solche Gehäuseeinheit hat den Vorteil, dass durch die Tragstruktur aus Metall auch über die Lebensdauer des Head-up-Displays die Stabilität, insbesondere die Formstabilität, gewährleistet werden kann. Durch Verwenden von Wandungsbereichen aus Kunststoff oder Plastik können bei der Herstellung aber gleichzeitig Gewicht und Kosten gespart werden. Insgesamt kann so über den Benutzungszeitraum, also die Lebensdauer, des Head-up-Displays ein besonders zuverlässiges Gehäuse geschaffen werden.

Die Tragstruktur kann auch als Stützstruktur bezeichnet werden. Die Tragstruktur kann das eingangs genannte Skelett, also zum Beispiel ein Gerüst für eine Wandung, mit den Wandungsbereichen aus Kunststoff ausbilden. Die Tragarme können auch als Rippen oder Speichen bezeichnet werden. Die Tragarme können den Zweck von Knochen in einem Wirbeltierskelett erfüllen und zum Beispiel als Tragflächen oder Stützflächen für die Wandungsbereiche ausgebildet sein. Die Gesamtheit der Wandungsbereiche kann eine Wandung oder Hülle für die Tragarme und/oder die Tragstruktur, ausbilden. Das heißt, die Tragarme, insbesondere die Tragstruktur, kann mit der Wandung überzogen oder umhüllt sein.

Mit einem Head-up-Display (HUD - Kopfobenanzeige) ist, wie eingangs beschrieben, ein Anzeigesystem gemeint, bei dem ein Nutzer, wie zum Beispiel ein Fahrer in einem Kraftfahrzeug, seine Blickrichtung und damit seine Kopfhaltung beibehalten kann, da eine Information in sein Sichtfeld projiziert wird. Das Head-up-Display kann zum Beispiel neben dem Gehäuse mit der zuvor beschriebenen Gehäuseeinheit die Optikbaugruppe umfassen. Die Optikbaugruppe kann zum Beispiel eine bildgebende Einheit oder einen Projektor (PGU - Picture Generation Unit) und ein Optikmodul umfassen. Je nach Art des HUD kann auch eine Projektionsfläche, also zum Beispiel der eingangs genannte Combiner, umfasst sein. Die bildgebende Einheit erzeugt das Projektionsbild.

Mit dem Projektionsbild ist vorliegend eine Abbildung gemeint, die dem Nutzer, also zum Beispiel einem Fahrer eines Kraftfahrzeugs, angezeigt oder dargestellt werden soll. Das Projektionsbild kann, wie eingangs erwähnt, Zustandsdaten, wie beispielsweise Fahrzeugdaten und/oder Umgebungsdaten abbilden, die der Nutzer als Information zum Zustand des Fahrzeugs oder der Umgebung erfassen kann. Zu den Zustandsdaten kann zum Beispiel eine Richtungsanzeige, eine Geschwindigkeitsbegrenzung, eine Fahrspur, oder andere relevante Daten gehören, um hier nur einige Beispiel zu nennen.

Zum Erzeugen oder Abgeben des Projektionsbilds kann die bildgebende Einheit zum Beispiel eine Lichtquelle umfassen. Als Lichtquelle eignen sich zum Beispiel Leuchtdioden (LEDs) oder Laser. Das Bild kann zum Beispiel durch ein Display (Bildschirm), insbesondere ein TFT-Display (TFT: Thin-Film-Transistor- Dünnschichttransistor) oder ein LCD (Flüssigkristallbildschirm), erzeugt werden. Als andere Art von Lichtquelle eignet sich zum Beispiel ein Laser, mit dem sich zum Beispiel eine holografische Darstellung des Projektionsbilds als erweiterte Realität (Augmented Reality) erzeugen lässt.

Das Optikmodul ist zum Umlenken oder Umleiten des erzeugten Projektionsbilds auf die gewünschte Projektionsfläche, also zum Beispiel den Combiner, ausgebildet. Dazu kann das Optikmodul zum Beispiel einen sogenannten Kollimator aufweisen. Ein Kollimator ist ein an sich bekanntes Optikbauteil zur Erzeugung von Licht mit annähernd parallelem Strahlengang aus einer divergenten Lichtquelle. Dieser als Kollimation bezeichnete Vorgang dient häufig dazu, dem Licht eine bestimmte Richtung zu geben. Weitere Komponenten des Optikmoduls können zum Beispiel eine oder mehrere Umlenkspiegel, beispielsweise in Form eines Klappspiegels (Folding Mirror) und/oder eines asphärischen Spiegels (Aspherical Mirror) sein.

Die Projektionsfläche ist bevorzugt eine spiegelnde, lichtdurchlässige Scheibe. Der Benutzer des HUD sieht somit die gespiegelte Information der bildgebenden Einheit und gleichzeitig die reale Welt hinter der Scheibe. Das erzeuge, virtuelle Bild, also das Projektionsbild, kann so projiziert werden, dass es mit einem Auge (monokular) oder mit beiden Augen (binokular) erfasst werden kann.

Die Bilderzeugung und Bildprojektion mittels HUD ist an sich bekannt. Beispielweise kann die Optikbaugruppe dazu zudem eine Steuerelektronik umfassen. Die Steuerelektronik kann zum Beispiel eine Recheneinheit oder ein Steuergerät zum Ansteuern oder Betreiben der bildgebenden Einheit und/oder des Optikmoduls umfassen. Durch das Ansteuern kann die bildgebende Einheit dazu veranlasst werden, das gewünschte Projektionsbild auszugeben. Das Optikmodul kann zum Beispiel eine Verstellmechanik zum Verstellen der Komponenten umfassen. Die Verstellmechanik kann beispielsweise mittel der Recheneinheit angesteuert werden. Durch das Ansteuern kann das Optikmodul dazu veranlasst werden, das erzeugte Projektionsbild in die gewünschte Richtung umzulenken oder abzulenken. Dabei erfolgt das Steuern derart, dass ein für den Nutzer optimales Projektionsbild angezeigt wird. Optimal bedeutet hier, dass zum Beispiel eine gewünschte Bildqualität, wie etwa eine Bildschärfe und/oder eine Verzerrung, und/oder eine vorbestimmte Bildposition in der Umgebung, also ein vorgegebener Bildabstand und eine Lage relativ zum Nutzer erreicht wird.

Mittels der Recheneinheit kann hierbei eine Toleranzberechnung für die optische Kalkulation der Bildprojektion durchgeführt werden. Das heißt, es kann anhand von Referenzpunkten, beispielsweise am Gehäuse, eine Position für das Projektionsbild in der Umgebung berechnet werden. So kann sichergestellt werden, dass das Projektionsbild immer in der gewünschten Qualität und der passenden Position angezeigt wird. Die Ansteuerung der bildgebenden Einheit und des Optikmoduls kann abhängig von der optischen Kalkulation erfolgen.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Die auszugebenden Zustandsdaten für das Projektionsbild kann das HUD, insbesondere die Steuerelektronik von einem elektronischen Fahrzeugführungssystem erfassen. Unter einem elektronischen Fahrzeugführungssystem kann ein elektronisches System verstanden werden, das dazu eingerichtet ist, ein Fahrzeug vollautomatisch oder vollautonom zu führen, insbesondere ohne dass ein Eingriff in eine Steuerung durch einen Fahrer erforderlich ist. Das Fahrzeug führt alle erforderlichen Funktionen, wie Lenk-, Brems- und/oder Beschleunigungsmanöver, die Beobachtung und Erfassung des Straßenverkehrs sowie entsprechende Reaktionen automatisch durch. Insbesondere kann das elektronische Fahrzeugführungssystem einen vollautomatischen oder vollautonomen Fahrmodus des Kraftfahrzeugs nach Stufe 5 der Klassifizierung gemäß SAE J3016 implementieren. Unter einem elektronischen Fahrzeugführungssystem kann auch ein Fahrerassistenzsystem (englisch: "advanced driver assistance system", ADAS) verstanden werden, welches den Fahrer beim teilweise automatisierten oder teilautonomen Fahren unterstützt. Insbesondere kann das elektronische Fahrzeugführungssystem einen teilweise automatisierten oder teilautonomen Fahrmodus nach den Stufen 1 bis 4 gemäß der SAE J3016-Klassifizierung implementieren. Hier und im Folgenden bezieht sich "SAE J3016" auf die entsprechende Norm in der Version vom April 2021.

Die wenigstens teilweise automatische Fahrzeugführung kann es daher beinhalten, das Fahrzeug gemäß eines vollautomatischen oder vollautonomen Fahrmodus der Stufe 5 nach SAE J3016 zu führen. Die wenigstens teilweise automatische Fahrzeugführung kann auch beinhalten, das Fahrzeug gemäß eines teilweise automatisierten oder teilautonomen Fahrmodus nach den Stufen 1 bis 4 nach SAE J3016 zu führen.

Zu der Erfindung gehören Ausführungsformen, durch die sich zusätzliche Vorteile ergeben.

Gemäß einer Ausführungsform weist die Tragstruktur und/oder weisen insbesondere die Tragarme zumindest eine Befestigungsfläche für zumindest eine Komponente einer Optikbaugruppe, insbesondere eines Optikmoduls des Head-up-Displays, auf. Das heißt, die Komponenten der Optikbaugruppe können an den Befestigungsflächen befestigt werden. Anders ausgedrückt, liegen die Komponenten an den Befestigungsflächen an und können dort mit der Gehäuseeinheit verbunden werden. Es werden somit die Metallbauteile der Gehäuseeinheit für die Befestigung und somit als Stützflächen für die Komponenten der Optikbaugruppe verwendet.

Hierdurch ergibt sich der Vorteil, dass eine besonders stabile Lage der Komponenten sichergestellt werden kann. Die Stabilität kann aufgrund der Verwendung des Metalls insbesondere über die gesamte Lebensdauer des HUDs weitgehend erreicht werden. Durch die geringe Verformbarkeit, also die Formstabilität, können somit die vorgenannten Referenzpunkte oder eine Bezugsebene für die Toleranzberechnung der optischen Kalkulation der Bildprojektion geschaffen werden. Die Metallteile behalten ihre Form über die Lebensdauer in der Regel bei, sodass das Projektionsbild auch über den Benutzungszeitraum nicht verkippt oder verzogen dargestellt wird.

Gemäß einer Ausführungsform ist die Tragstruktur aus zumindest zwei Tragelementen zusammengesetzt, die zum Bilden der Tragstruktur formschlüssig und/oder kraftschlüssig miteinander verbunden sind. Die Tragstruktur kann somit mehrteilig oder mehrelementig ausgebildet sein. Zum Verbinden oder Befestigen der Tragelemente können die Tragelemente zum Beispiel miteinander verschweißt, verschraubt und/oder vernietet sein. Natürlich sind auch andere bekannte Befestigungsmethoden zum formschlüssigen und/oder kraftschlüssigen Verbinden denkbar.

Gemäß einer Ausführungsform ist die Tragstruktur mit den Wandungsbereichen durch Umspritzen verbunden. Das heißt, die Wandung kann mittels Überspritzen (Overmolding) auf die Tragstruktur aufgebracht und daran befestigt werden. Die Wandung kann somit einteilig ausgebildet sein. Hierdurch ergibt sich der Vorteil, dass die Fertigung der Gehäuseeinheit, insbesondere in Bezug auf die Wandungsbereiche, besonders einfach umgesetzt und kostengünstig werden kann.

Gemäß einer Ausführungsform sind die Wandungsbereiche im Bereich der jeweiligen Öffnungen an den jeweiligen Tragarmen befestigt oder angebracht. Das heißt, die Wandung kann zum Beispiel mehrteilig ausgebildet sein. Die Wandungsbereiche können dabei zum Beispiel als Platten oder Scheiben verstanden werden, die zum Beispiel kraftschlüssig und/oder formschlüssig mit einem geeigneten Befestigungsmittel an den jeweiligen Tragarmen der Tragstruktur befestigt sein können. Das heißt, die einzelnen Elemente der Wandung, also die Wandungsbereiche, können teilweise mit den Tragarmen überlappen. Die kraftschlüssige und/oder formschlüssige Verbindung kann, wie zuvor beschrieben, erreicht werden.

Gemäß einer Ausführungsform weisen die Wandungsbereiche zumindest eine Sollbruchstelle auf. Bevorzugt kann jeder der Wandungsbereiche im Bereich der Öffnungen zwischen den Tragarmen ist, zumindest eine Sollbruchstelle, insbesondere eine oder mehrere Sollbruchstellen, aufweisen. So können die Anforderungen zur Crash-Sicherheit oder Unfallsicherheit, wie sie zum Beispiel von der Gesellschaft Euro NCAP vorgegeben ist, erfüllt werden. Die konkrete Anordnung und Positionierung der Sollbruchstellen kann zum Beispiel von dem jeweiligen Fahrzeug und zum Beispiel einem Einbauort des Head-up-Displays im Fahrzeug abhängen.

Mit einer Sollbruchstelle ist eine durch eine besondere Struktur, Gestaltung oder Konstruktion, bestimmte Stelle gemeint, die bei Belastung oder Überlastung vorhersagbar nachgibt, insbesondere bricht. Eine Sollbruchstelle kann zum Beispiel durch eine Materialverjüngung oder Dünnstelle oder eine Aussparung im Material realisiert werden. Beispiele für eine Sollbruchstelle sind eine Kerbe, eine Perforation oder eine Ritzspur.

Gemäß einer Ausführungsform ist durch die Tragstruktur eine Grundform ausgebildet, durch die zusammen mit den Wandungsbereichen ein Aufnahmeraum zumindest für ein Optikmodul des Head-up-Displays, wie es beispielhaft zuvor beschrieben wurde, begrenzt ist. Anders ausgedrückt, formt das Gehäuseteil einen Aufnahmeraum oder Aufnahmebereich für das Optikmodul. Natürlich können aber auch weitere Komponenten der Optikbaugruppe in den Aufnahmeraum aufgenommen oder gehalten sein. Das Gehäuseteil kann somit nach Art eines Bechers oder nach Art einer Schale geformt sein und weist die Aufnahme oder Ausbuchtung auf. Die konkrete Form der Gehäuseeinheit, insbesondere des Aufnahmeraums, kann abhängig von der Form der Optikbaugruppe und/oder einem Bauraum in den die Gehäuseeinheit eingebaut werden soll, gewählt sein.

Gemäß einer Ausführungsform weist die Tragstruktur eine Grundform auf, durch die zusammen mit den Wandungsbereichen eine Einbuchtung zumindest für eine bildgebende Einheit des Head-up-Displays begrenzt ist. Das heißt, die bildgebende Einheit kann zum Beispiel in die Einbuchtung eingeschoben oder eingebracht werden und dort befestigt werden. Zum Bereitstellen der Einbuchtung kann der vorgenannte Aufnahmeraum zum Beispiel nach innen eingebuchtet sein. Das heißt, der zuvor beschriebene Aufnahmeraum umfasst beispielweise die Einbuchtung. Die Einbuchtung kann zum Beispiel neben der Ausbuchtung für das Optikmodul angeordnet sein. Im Einbauzustand kann die Gehäuseeinheit somit mit der Einbuchtung auf die bildgebende Einheit gestülpt werden. Wenn der Aufnahmeraum als Innenraum oder Innenseite der Gehäuseeinheit betrachtet wird, kann die bildgebende Einheit somit außen an der Gehäuseeinheit gehalten werden.

Gemäß einer Ausführungsform umfasst die Gehäuseeinheit eine Einlassöffnung für ein Projektionsbild einer bildgebenden Einheit des Head-up-Displays. Das heißt, durch die Gehäuseeinheit wird ermöglicht, dass das Projektionsbild der bildgebenden Einheit nach außen an die Umgebung, also zum Beispiel zur Projektionsfläche, gelangen kann. Die Einlassöffnung kann zum Beispiel im Bereich der Wandungsbereiche realisiert sein. Das heißt, der Einlassbereich kann in einer der Öffnungen zwischen den Tragarmen liegen, wobei der jeweilige Wandungsbereich dort die Öffnung nicht vollständig verschließt. Der zurückbleibende, offene Bereich ist die Einlassöffnung.

Gemäß einer Ausführungsform umfasst die Gehäuseeinheit eine Durchlassöffnung für einen Verstellmotor zum Verstellen zumindest eines Umlenkspiegels eines Optikmoduls des Head-up-Displays. Mittels der Durchlassöffnung kann somit sichergestellt werden, dass der Verstellmotor selbst oder dessen Verbindung zum Umlenkspiegel in die Gehäuseeinheit eingebracht werden kann. Der Verstellmotor kann zum Beispiel mit dem Optikmodul, insbesondere dessen Umlenkspiegel(n), verbunden sein, um eine Stellung des jeweiligen Umlenkspiegels zu verändern. So kann eine Umlenkrichung oder Ablenkrichtung für das Projektionsbild verändert werden. Dadurch kann zum Beispiel die Bildposition eingestellt werden. Der Verstellmotor kann somit zum Beispiel die vorgenannte Verstellmechanik umsetzen.

Insbesondere kann die Durchlassöffnung für elektrische Anschlüsse an die vorgenannte Steuerelektronik zum Steuern des Verstellmotors oder dessen Verbindungselement für den jeweiligen Umlenkspiegel vorgesehen sein. Das heißt, der Verstellmotor kann sich entweder selbst im Aufnahmebereich befinden oder außerhalb des Aufnahmebereichs, zum Beispiel gemeinsam mit der bildgebenden Einheit in der Ausbuchtung, angeordnet sein.

Die Durchlassöffnung kann zum Beispiel im Bereich der Wandungsbereiche realisiert sein. Das heißt, die Durchlassöffnung kann in einer der Öffnungen zwischen den Tragarmen liegen, wobei der jeweilige Wandungsbereich dort die Öffnung nicht vollständig verschließt. Der zurückbleibende, offene Bereich ist die Durchlassöffnung.

Gemäß einer Ausführungsform ist die Tragstruktur aus einer Aluminiumlegierung und/oder Magnesium und/oder einem Stahl gebildet. Diese Materialauswahl hat den Vorteil, besonders leicht bzw. besonders beständig und stabil zu sein.

Gemäß einer Ausführungsform sind die Wandungsbereiche aus einem Polycarbonat (PC) oder einem Polycarbonatgemisch (PC-Blend) gebildet. Polycarbonate sind thermoplastische Kunststoffe, die sich durch ihre besonders hohe Festigkeit und Isolationseigenschaften gegen elektrische Spannung auszeichnen. Als alternatives Material für die Wandungsbereiche eignet sich zum Beispiel Polypropylen (PP). Dieses kann auch in dem Polycarbonatgemisch umfasst sein.

Gemäß einem Aspekt betrifft die Erfindung des Weiteren ein Gehäuse für ein Head-up-Display mit einer Gehäuseeinheit, wie sie zuvor beschrieben wurde. Das Gehäuse umfasst eine Deckeleinheit zum Verschließen eines Aufnahmeraums der Gehäuseeinheit zum Aufnehmen von zumindest einer Komponente einer Objektbaugruppe des Head-up-Displays, wie sie zuvor beschrieben wurde. Die Deckeleinheit umfasst zumindest einen transparenten Bereich für ein Projektionsbild einer bildgebenden Einheit als Komponente der Optikbaugruppe. Das heißt, die Deckeleinheit kann zumindest für sichtbares Licht, also Licht, das in einem für den Menschen sichtbaren Frequenzbereich liegt, durchlässig sein. Mittels der Deckeleinheit kann somit sichergestellt werden, dass das Projektionsbild aus dem Aufnahmeraum nach außen, also zum Beispiel zur Projektionsfläche, gebracht werden kann. Bei dem hier erwähnten Aufnahmeraum kann es sich um den zuvor beschriebenen Aufnahmeraum der Gehäuseeinheit handeln.

Gemäß einem Aspekt betrifft die Erfindung des Weiteren ein Head-up-Display mit einer Gehäuseeinheit, wie sie zuvor beschrieben wurde oder einem Gehäuse, wie es zuvor beschrieben wurde. Dabei ist in der Gehäuseeinheit bzw. in dem Gehäuse zumindest eine Komponente einer Optikbaugruppe des Head-up-Displays aufgenommen oder gehalten. Bevorzugt können alle Komponenten der Optikbaugruppe des Head-up-Displays an der Gehäuseeinheit befestigt sein. Wie zuvor beschrieben, kann das Head-up-Display zusätzlich zu der Optikbaugruppe eine Projektionsfläche, wie zum Beispiel eine Scheibe oder einen Combiner, aufweisen.

Gemäß einem Aspekt betrifft die Erfindung des Weiteren ein Kraftfahrzeug mit einem Head-up-Display, wie es zuvor beschrieben wurde. Dabei ist eine Fahrzeugscheibe, insbesondere eine Windschutzscheibe des Kraftfahrzeugs als Projektionsfläche des Head-up-Displays ausgebildet. Das Kraftfahrzeug ist bevorzugt als Kraftwagen, insbesondere als Personenkraftwagen oder Personenbus oder als Lastkraftwagen oder Motorrad, ausgebildet.

Weitere Ausführungsformen des erfindungsgemäßen Gehäuses, des erfindungsgemäßen Head-up-Displays und des erfindungsgemäßen Kraftfahrzeugs folgen unmittelbar aus den verschiedenen Ausgestaltungen der erfindungsgemäßen Gehäuseeinheit und umgekehrt. Insbesondere lassen sich einzelne Merkmale und entsprechende Erläuterungen sowie Vorteile bezüglich der verschiedenen Ausführungsformen zu der erfindungsgemäßen Gehäuseeinheit analog auf entsprechende Ausführungsformen des erfindungsgemäßen Gehäuses, des erfindungsgemäßen Head-up-Displays und des erfindungsgemäßen Kraftfahrzeugs übertragen, und umgekehrt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- Fig. 1: eine schematische Darstellung eines Kraftfahrzeugs mit einem Head-up-Display und
- Fig. 2: eine schematische Darstellung einer Gehäuseeinheit für das Head-up-Display.

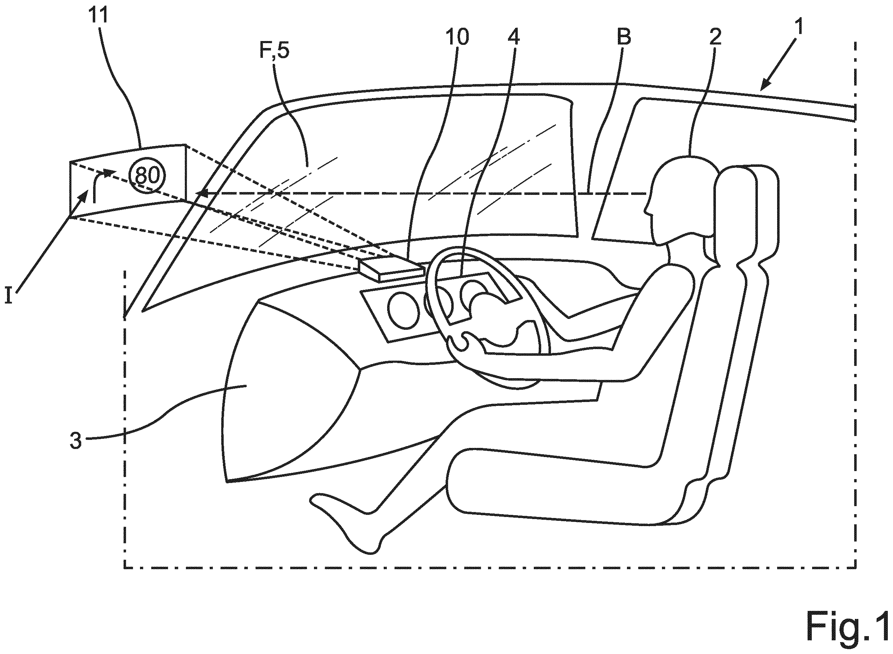

Fig. 1 zeigt eine schematische Darstellung eines Kraftfahrzeugs 1. Das Kraftfahrzeug 1 ist zum Beispiel als Personenkraftwagen ausgebildet. In Fig. 1 ist ein Ausschnitt eines Fahrzeuginnenraums, insbesondere einer Fahrerkabine, des Kraftfahrzeugs 1 gezeigt. Der Ausschnitt zeigt die Fahrerkabine im Bereich eines Cockpits, also einer Position, in der sich in einem herkömmlichen Fahrzeug der Fahrersitz befindet. In Fig. 1 ist ein Fahrer 2 als Insasse im Kraftfahrzeug 1 zu sehen, der sich im Fahrersitz befindet. In Fahrtrichtung des Kraftfahrzeugs 1 vor dem Fahrer 2 befindet sich ein Armaturenbrett 3, an dem zum Beispiel auch das Lenkrad zum händischen oder manuellen Lenken des Kraftfahrzeugs 1 angebracht ist. Am Armaturenbrett 3 ist ein Display 4, also zum Beispiel ein Monitor oder Bildschirm, angeordnet. Das Display 4 kann zum Beispiel einem sogenannten Infotainmentsystem zugeordnet sein. Das Display 4 kann als Bordcomputer oder Multifunktionsanzeige oder Fahrerinformationssystem verstanden werden. Es handelt sich somit um ein Anzeigegerät, mit welchem dem Fahrer 2 verschiedene Informationen, zum Beispiel zum Status oder Zustand des Kraftfahrzeugs 1 oder zur Umgebung, angezeigt werden können. Zu den Informationen kann zum Beispiel eine Geschwindigkeitsanzeige, Warnsignale, die Uhrzeit, eine Richtungsanzeige oder eine Navigationsanzeige gehören. Das Display 4 kann vorliegend zum Beispiel mit einem elektronischen Fahrzeugführungssystem oder einem Fahrerassistenzsystem, wie zum Beispiel einer automatischen Distanzregelung (Adaptive Cruise Control, ACC), gekoppelt sein. So können zum Beispiel für den Fahrer zwei relevante Daten vom Fahrerassistenzsystem über das Display 4 als Information an den Fahrer 2 ausgegeben werden.

Wie in Fig. 1 gezeigt, sollte der Fahrer 2 beim Führen oder Lenken des Kraftfahrzeugs 1 seinen Blick auf die Straße gerichtet halten. Das heißt, die Blickrichtung B des Fahrers 2 verläuft während der Fahrt vorzugsweise in Fahrtrichtung des Fahrzeugs durch eine Windschutzscheibe 5. Möchte der Fahrer 2 nun die angezeigten Informationen vom Display 4 abrufen, müsste der Fahrer 2 seinen Blick nach unten richten, also senken. Das könnte den Fahrer 2 vom Verkehrsgeschehen ablenken.

Um diese Ablenkung zu vermeiden, gibt es in modernen Kraftfahrzeugen den Ansatz, ein sogenanntes Head-up-Display 10 zu verwenden. Ein Head-up-Display (HUD) ist ein an sich bekanntes Anzeigegerät. Mit dem Head-up-Display 10 kann die gewünschte Anzeigeinformation I dem Fahrer 2 in dessen Sichtfeld, also in Blickrichtung B, angezeigt werden. Dadurch kann der Fahrer 2 alle wesentlichen Informationen erhalten, ohne den Blick von der Straße abwenden zu müssen. Dem Fahrer 2 wird dazu ein Projektionsbild 11, das die Anzeigeinformation I enthält, ins Sichtfeld projiziert. Das Projektionsbild 11 ist ein virtuelles Bild, das, wie in Fig. 1 gezeigt, zum Beispiel etwa zwei bis drei Meter vor die Motorhaube projiziert wird, wobei die Umgebung im Hintergrund des Projektionsbilds 11 weiterhin sichtbar bleibt.

Wie in Fig. 1 gezeigt, kann das Head-up-Display 10 am Armaturenbrett 3 angeordnet sein. Der Aufbau und die Funktionsweise eines Head-up-Displays ist an sich bekannt. In einer beispielhaften Bauform umfasst das HUD 10 eine Optikbaugruppe und ein Gehäuse. Das Gehäuse kann die Optikbaugruppe aufnehmen oder zum Befestigen der Optikbaugruppe daran ausgebildet sein. Die Optikbaugruppe umfasst zum Beispiel eine bildgebende Einheit (PGU - Picture Generation Unit) und ein Optikmodul. Je nach Art des HUD kann weiterhin eine Projektionsfläche F vorgesehen sein. Im vorliegenden Ausführungsbeispiel ist das HUD 10 als Windschutzscheiben-HUD ausgebildet. Das heißt, die Windschutzscheibe 5 des Kraftfahrzeugs 1 kann als Projektionsfläche verwendet werden. Alternativ kann zum Beispiel ein Combiner-HUD vorgesehen sein, bei dem die Projektionsfläche eine spiegelnde, lichtdurchlässige Scheibe ist, die Teil der Optikbaugruppe ist.

Auf diese Projektionsfläche F, hier also die Windschutzscheibe 5, wird das Projektionsbild 11 projiziert, sodass der Fahrer 2 das gespiegelte Bild der bildgebenden Einheit und gleichzeitig die reale Welt hinter der Windschutzscheibe 5 sieht. Das Projektionsbild 11 wird von der bildgebenden Einheit erzeugt. Zum Beispiel kann die bildgebende Einheit ein Display, insbesondere ein TFT-Display, sein. Das Optikmodul dient zum Umlenken oder Umleiten des erzeugten Projektionsbilds 11 auf die Projektionsfläche F. Dazu kann das Optikmodul zum Beispiel einen Umlenkspiegel und einen Kollimator umfassen. Zu dem Umlenkspiegel kann zum Beispiel ein Klappspiegel und ein asphärischer Spiegel gehören. Der Umlenkspiegel kann zum Beispiel verstellbar ausgebildet sein. Dazu kann von der Optikbaugruppe zum Beispiel ein Verstellmotor umfasst sein. Durch das Verstellen kann erreicht werden, dass das Projektionsbild 11 an die für den Fahrer 2 gewünschte Position bevorzugt unverzerrt projiziert wird.

Von der Optikbaugruppe kann zum Beispiel weiterhin eine Steuerelektronik für die bildgebende Einheit zum Erzeugen des Projektionsbilds 11 und/oder zum Beispiel zum Steuern oder Verstellen des Umlenkspiegels umfasst sein. Alternativ kann die Steuerelektronik zum Beispiel von einer elektronischen Steuereinheit (ECU - Electronic Control Unit) des Kraftfahrzeugs 1 bereitgestellt werden. Dazu kann das HUD 10 an das Fahrzeugnetzwerk angeschlossen werden.

Um das Projektionsbild 11 über die Lebensdauer oder den Benutzungszeitraum des HUD 10 für den Fahrer 2 stabil, also insbesondere passend ausgerichtet und unverzogen oder unverzerrt, anzuzeigen, nutzt die Steuerelektronik Standardmethoden zur optischen Berechnung. Dabei wird insbesondere eine Toleranzberechnung durchgeführt, bei der das Projektionsbild 11 relativ zu einer vorbestimmten Bezugsebene angepasst wird. Die Bezugsebene dient als Referenzpunkt oder Referenzfläche für die Toleranzberechnung. Als Referenzfläche wird hierbei zum Beispiel eine Befestigungsfläche verwendet, mittels der die jeweilige Komponente der Optikbaugruppe, also zum Beispiel die bildgebende Einheit oder das Optikmodul, im Gehäuse des HUD 10 befestigt ist. Deshalb ist es wichtig, dass die Befestigungsfläche insbesondere über die Lebensdauer des HUD 10 stabil ist. Gleichzeitig soll das Gehäuse aber auch möglichst leicht und kostengünstig sein.

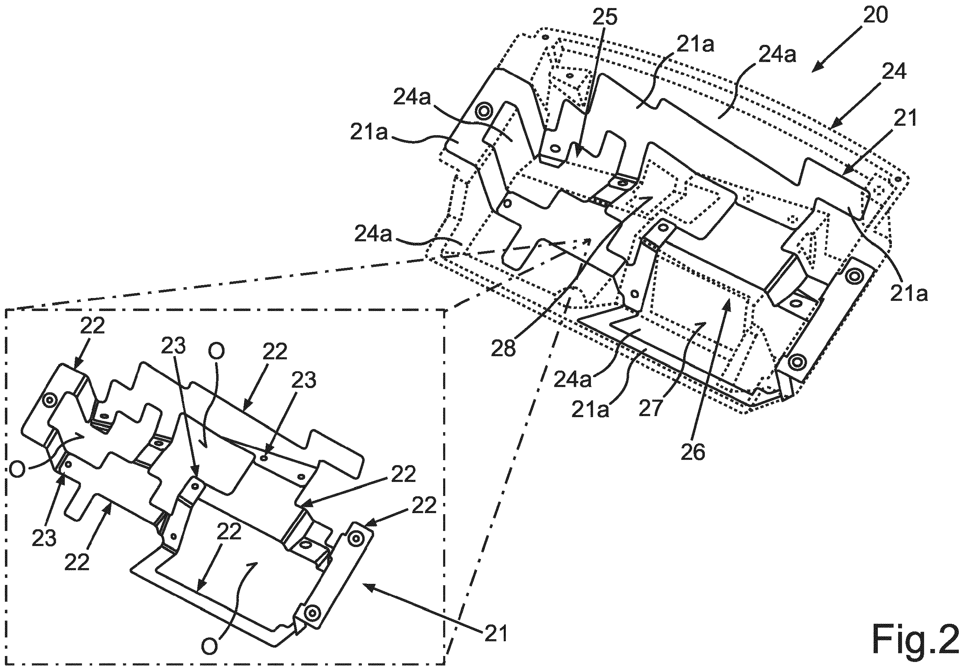

Um einerseits Formstabilität zu gewährleisten und andererseits ein kostengünstiges und leichtes Gehäuse bereitzustellen, gibt es den Ansatz, einzelne Gehäuseteile aus einer Materialkombination aus Kunststoff und Metall herzustellen. Ein solches Gehäuseteil ist in Form einer Gehäuseeinheit 20 beispielhaft in Fig. 2 dargestellt. Die Gehäuseeinheit 20 ist dabei zum Aufnehmen einzelner Komponenten der vorgenannten Optikbaugruppe ausgebildet. Wie in Fig. 2 gezeigt, umfasst die Gehäuseeinheit 20 eine Tragstruktur 21 und eine Wandung oder Wandungsstruktur 24. Die Tragstruktur 21 ist aus Metall, beispielsweise aus einer Aluminiumlegierung und/oder aus Stahl, gebildet. Die Wandungsstruktur 24 ist aus Kunststoff, insbesondere Polycarbonat oder einem Polycarbonatmix, gebildet. Die Tragstruktur 21 umfasst mehrere Tragarme 21a. Dadurch bildet die Tragstruktur 21 eine Art Skelett oder Stützstruktur für die Wandungsstruktur 24 aus. Die Tragarme wirken dabei wie Knochen, sozusagen als Tragflächen oder Stützflächen für die Wandungsstruktur 24.

Die Wandungsstruktur 24 umfasst mehrere Wandungsbereiche 24a, die an den Tragarmen 21 a gehalten sind. Mittels der Wandungsbereiche 24a sind Öffnungen O zwischen den Tragarmen 21a teilweise oder abschnittsweise verschlossen oder bedeckt. Das resultierende Metallskelett, also die Tragstruktur 21, dient somit als Träger oder Stütze, um die Stabilität des Gehäuses zu garantieren. Bevorzugt kann die Tragstruktur 21, insbesondere die Tragarme, die vorgenannte Befestigungsfläche für die jeweilige Komponente der Optikbaugruppe bereitstellen. Das heißt, die jeweilige Komponente kann direkt an einem der Tragarme oder an mehreren der Tragarme 21a befestigt sein.

Die Wandungsstruktur 24 bildet eine Hülle, die die Tragstruktur 21 umschließt oder überdeckt. Bevorzugt ist die Tragstruktur 21 mit den Wandungsbereichen 24a durch Umspritzen verbunden. Das heißt, die Wandungsstruktur 24 wird einteilig gefertigt, indem sie mittels Überspritzen auf die Tragstruktur 21 aufgebracht wird.

Wie in der in Fig. 2 gezeigten, exponierten oder freigestellten Darstellung der Tragstruktur 21 gezeigt ist, kann die Tragstruktur 21 aus mehreren Tragelementen 22 zusammengesetzt sein. Im vorliegenden Ausführungsbeispiel sind beispielhaft sechs solcher Tragelemente dargestellt. Natürlich können auch mehr oder weniger Tragelemente zum Bilden der Tragstruktur 21 vorgesehen sein. Die Tragelemente 22 sind formschlüssig und/oder kraftschlüssig miteinander verbunden. Dazu ist, wie in Fig. 2 gezeigt, ein geeignetes Befestigungsmittel 23 vorgesehen. Der Formschluss oder Kraftschluss kann zum Beispiel durch Verschweißen, Verschrauben oder Vernieten oder eine andere vorbestimmte, passende Methode zum formschlüssigen und/oder kraftschlüssigen Verbinden erfolgen. Im vorliegenden Ausführungsbeispiel kann es sich bei dem Befestigungsmittel 23 zum Beispiel um Nieten handeln.

Fig. 2 zeigt eine spezielle Grundform der Gehäuseeinheit 21 mit einer Ausbuchtung und einer Einbuchtung 26. Die Ausbuchtung kann auch als Aufnahme oder Aufnahmeraum 25 bezeichnet werden. Zum Bilden des Aufnahmeraums 25 sind die Tragstruktur 21 und die Wandungsbereiche 24 a derart geformt, dass sich ein Bereich zum Aufnehmen zumindest des Optikmoduls des HUD 10 ergibt. Wie in Fig. 2 gezeigt, ist die Grundform so gewählt, dass sich eine Vertiefung nach Art eines Bechers oder einer Schale ergibt und in der das Optikmodul zum Beispiel befestigt werden kann.

Die Einbuchtung 26 ist neben der Ausbuchtung im Aufnahmeraum 25 angeordnet. Die Einbuchtung 26 kann als Vorwölbung in die entgegengesetzte Richtung zur Ausbuchtung verstanden werden. Die Einbuchtung ist zum Befestigen oder zum Aufnehmen der bildgebenden Einheit des HUD 10 ausgebildet. Im eingebauten Zustand kann die Gehäuseeinheit 20 somit zum Beispiel über die bildgebende Einheit gestülpt oder auf diese aufgesetzt werden.

Im Ausführungsbeispiel in Fig. 2 umfasst die Gehäuseeinheit 20 im Bereich der Einbuchtung 26 eine Einlassöffnung 27 für das Projektionsbild 11 der bildgebenden Einheit. Durch die Einlassöffnung 27 kann Licht in Form des Projektionsbilds von der bildgebenden Einheit in den Aufnahmeraum gestrahlt und dort unter Verwendung des Optikmoduls an die Projektionsfläche umgelenkt werden. Die Einlassöffnung 27 ist dadurch realisiert, dass in einem der Wandungsbereiche 24a der eine Öffnung O zwischen mehreren Tragarmen 21a verschließt, eine Öffnung oder einen Durchbruch eingebracht ist.

In analoger Weise weist die Gehäuseeinheit 20 zusätzlich beispielhaft auch eine Durchlassöffnung 28 als Durchbruch in einem weiteren Wandungsbereich 24a um Bereich der Aufnahme auf. Die Durchlassöffnung 28 dient als Öffnung für einen Verstellmotor, insbesondere dessen Anschlüsse an die Steuerelektronik oder deren Verbindungselement für den Umlenkspiegel. Das heißt, der Verstellmotor kann zum Beispiel ebenfalls in dem Aufnahmeraum 25, insbesondere in der Ausbuchtung, angeordnet sein.

Die Gehäuseeinheit 20 kann, wie eingangs beschrieben, Teil eines Gehäuses für das HUD 10 sein. Das Gehäuse kann neben der Gehäuseeinheit 20 zum Beispiel noch eine Deckeleinheit umfassen. Die Deckeleinheit kann den Aufnahmeraum 25 der Gehäuseeinheit 20 zur Umgebung hin verschließen. Um das Projektionsbild durchzulassen, kann die Deckeleinheit zumindest eine für das Projektionsbild transparenten Bereich umfassen.

Um Anforderungen an die Unfallsicherheit, insbesondere das Crashverhalten, von Komponenten eines Kraftfahrzeugs 1 zu erfüllen, kann die Wandungsstruktur 24 Sollbruchstellen aufweisen. Die Sollbruchstellen können zum Beispiel durch eine Verjüngung oder Aussparung im Material der Wandungsstruktur 24 realisiert sein. So kann sichergestellt werden, dass im Falle eines Unfalls die Gehäuseeinheit 20 an vordefinierten Stellen bricht. Dadurch können zum Beispiel Splitter verhindert werden.

Insgesamt zeigen die Ausführungsbeispiele ein Skelettdesign für ein HUD-Gehäuse.

## Patentansprüche

1. Gehäuseeinheit (20) ein Head-up-Display (10), wobei die Gehäuseeinheit (20) eine Tragstruktur (21) aus Metall und Wandungsbereiche (24 a) aus Kunststoff umfasst, wobei die Tragstruktur (21) mehrere Tragarme (21a) umfasst und die Tragstruktur (21) vorzugsweise einteilig ausgebildet ist, und die Wandungsbereiche (24a) an den Tragarmen (21a) gehalten sind, wobei mittels der Wandungsbereiche (24a) Öffnungen (O) zwischen den Tragarmen (21a) zumindest teilweise verschlossen sind.

2. Gehäuseeinheit (20) nach Anspruch 1, wobei die Tragstruktur (21), insbesondere die Tragarme (21a), zumindest eine Befestigungsfläche für zumindest eine Komponente einer Optikbaugruppe, insbesondere eines Optikmoduls des Head-up-Displays (10) aufweist.

3. Gehäuseeinheit (20) nach einem der vorhergehenden Ansprüche, wobei die Tragstruktur (21) aus zumindest zwei Tragelementen (22) zusammengesetzt ist, die zum Bilden der Tragstruktur (21) formschlüssig und/oder kraftschlüssig miteinander verbunden sind.

4. Gehäuseeinheit (20) nach einem der vorhergehenden Ansprüche, wobei die Tragstruktur (21) mit den Wandungsbereichen (24a) durch Umspritzen verbunden ist.

5. Gehäuseeinheit (20) nach einem der vorhergehenden Ansprüche, wobei die Wandungsbereiche (24a) im Bereich der jeweiligen Öffnungen (O) an jeweiligen Tragarmen (21a) befestigt sind.

6. Gehäuseeinheit (20) nach einem der vorhergehenden Ansprüche, wobei die Wandungsbereiche (24a) zumindest eine Sollbruchstelle aufweisen.

7. Gehäuseeinheit (20) nach einem der vorhergehenden Ansprüche, wobei durch die Tragstruktur (21) eine Grundform ausgebildet ist, durch die zusammen mit den Wandungsbereichen (24a) ein Aufnahmeraum (25) zumindest für ein Optikmodul des Head-up-Displays (10) begrenzt ist.

8. Gehäuseeinheit (20) nach einem der vorhergehenden Ansprüche, wobei durch die Tragstruktur (21) eine Grundform auf, durch die zusammen mit den Wandungsbereichen (24a) eine Einbuchtung (26) zumindest für eine bildgebende Einheit des Head-up-Displays (20 begrenzt ist.

9. Gehäuseeinheit (20) nach einem der vorhergehenden Ansprüche, wobei die Gehäuseeinheit (20) eine Einlassöffnung (27) für ein Projektionsbild (11) einer bildgebenden Einheit des Head-up-Displays (10) aufweist.

10. Gehäuseeinheit (20) nach einem der vorhergehenden Ansprüche, wobei die Gehäuseeinheit (20) eine Durchlassöffnung (28) für einen Verstellmotor zum Verstellen zumindest eines Umlenkspiegels eines Optikmoduls des Head-up-Displays (10) aufweist.

11. Gehäuseeinheit (20) nach einem der vorhergehenden Ansprüche, wobei die Tragstruktur (21) aus einer Aluminiumlegierung und/oder Magnesium und/oder einem Stahl gebildet ist.

12. Gehäuseeinheit (20) nach einem der vorhergehenden Ansprüche, wobei die Wandungsbereiche (24a) aus einem Polycarbonat oder einem PolycarbonatGemisch gebildet sind.

13. Gehäuse für ein Head-up-Display (10) mit einer Gehäuseeinheit (20) nach einem der vorhergehenden Ansprüche, wobei das Gehäuse eine Deckeleinheit zum Verschließen eines Aufnahmeraums (25) der Gehäuseeinheit (20) zum Aufnehmen von zumindest einer Komponente einer Optikbaugruppe des Head-up-Displays (10) aufweist, wobei die Deckeleinheit zumindest einen transparenten Bereich für ein Projektionsbild (11) einer bildgebenden Einheit als Komponente der Optikbaugruppe aufweist.

14. Head-up-Display (10) mit einer Gehäuseeinheit (20) nach einem der vorhergehenden Ansprüche 1 bis 12 oder einem Gehäuse nach Anspruch 13, wobei in der Gehäuseeinheit (20) zumindest eine Komponente einer Optikbaugruppe des Head-up-Displays (10) aufgenommen ist.

15. Kraftfahrzeug (1) mit einem Head-up-Display (10) nach Anspruch 14, wobei eine Fahrzeugscheibe, insbesondere eine Windschutzscheibe (5) eine Projektionsfläche (F) des Head-up-Displays (10) ausbildet.
